# EUROPEAN PATENT SPECIFICATION

(11) **EP 0 694 677 B1**
(45) Date of publication and mention of the grant of the patent: **21.04.1999**
(21) Application number: 94305622.6
(22) Date of filing: 29.07.1994
(51) Int. Cl.: F01D 11/08, F01D 25/12, B22D 25/02

(54) **Seal for a gas turbine engine**
Schaufelspitzendichtungsring für eine Gasturbine
Virole d'étanchéité pour turbine à gaz

(43) Date of publication of application: 31.01.1996
(73) Proprietor: UNITED TECHNOLOGIES CORPORATION, Hartford, CT 06101 (US)
(72) Inventor: Sloop, Robert V., Jupiter, Florida 33458 (US); Auxier, Thomas A., Palm Beach Gardens, Florida 33418 (US); Kelch, George W., Palm Beach Gardens, Florida 33418 (US); Mack, Gregory J., Palm Beach Gardens, Florida 33418 (US)
(74) Representative: Leckey, David Herbert

(56) References cited:
- EP-A- 0 516 322
- EP-A- 0 559 251
- EP-A- 0 559 420
- WO-A-95/27126
- US-A- 3 408 044
- US-A- 3 957 104
- US-A- 4 280 792
- US-A- 4 307 993

## Description

This invention relates to gas turbine engines of the type having an annular flow path for working fluid. The invention is particularly related to a seal formed from several seal segments that extend circumferentially about the engine's longitudinal axis, and confine the working fluid to the flow path.

An axial flow gas turbine engine has a compression section, a combustion section and a turbine section. An annular flow path for the working fluid extends axially through the sections. A stator assembly extends about the annular flow path for confining the working fluid to the flow path and directing the fluid along the flow path.

As the working fluid flows along the flow path, the working fluid is pressurized in the compression section and burned with fuel in the combustion section to add energy to the working fluid. The hot, pressurized working fluid is expanded through the turbine section to produce work. A major portion of this work is used for driving a free turbine or developing thrust for an aircraft.

A remaining portion of the work generated by the turbine section is not used for these purposes. Instead it is used to compress the working fluid itself. A rotor assembly extends between the turbine section and the compression section to transfer this work from the turbine section to the compression section. The rotor assembly in the turbine section has rotor blades which extends outwardly across the working medium flow path. The rotor blades have airfoils which are angled with respect to the approaching flow to receive work from the working fluid and to drive the rotor assembly about the axis of rotation.

An outer air seal circumscribes the rotor blades to confine the working fluid to the flow path. The outer air seal is part of the stator structure and is formed of a plurality of arcuate segments. The stator assembly further includes an outer case and a structure for supporting the segments of the outer air seal from the outer case. The outer case and the support structure position the seal segments in close proximity to the blades to block the leakage of the working fluid past the tips of the blades. As a result, the segments are in intimate contact with the hot working fluid, receive heat from the working fluid and are cooled to keep the temperature of the segments within acceptable limits.

The use of cooling air increases the service life of the outer air seal in comparison to uncoiled outer air seals. However, the use of cooling air decreases the operating efficiency of the engine because a portion of the engine's useful work is used to pressurize the cooling air in the compressor. A decrease in the amount of cooling air required to provide a satisfactory service life for components such as the outer air seal increases the amount of cooling air which would be available for other purposes, such as providing thrust or powering a free turbine, and increases the overall engine efficiency.

Accordingly, what is needed is an outer air seal that minimizes the need for cooling air while providing the cooling necessary to extend the useful life of the outer air seal.

It is therefore an object of the present invention to provide an outer air seal that minimizes the need for cooling air while providing the cooling necessary to extend the useful life of the outer air seal.

US-A-4280792 discloses a stationary air-cooled shroud or cylinder forming a portion of a turbine assembly including an inner ring having a matrix of grooves formed therein, and an outer restraining ring covering the matrix so as to form a labyrinth of passageways for flow of cooling air therethrough.

WO-A-9527126, which is prior art only under Article 54(3) EPC discloses a seal in an axial flow gas turbine engine having an axis of rotation defined therethrough, an annular flow path concentric with said axis for working fluid flowing through at least one turbine stage of said engine, said one turbine stage including a plurality of turbine blades extending radially outward from said axis, and said flow path bounded by a static structure, said seal being secured to said static structure radially outward of said one turbine stage, said seal absorbing heat from said working fluid, said seal comprising:
a plurality of arcuate seal segments extending circumferentially about the flow path, each segment being spaced radially outward from said turbine blades, each segment being spaced circumferentially from each adjacent segment defining an inter-segment gap therebetween, each seal segment including
a sealing surface facing the working medium flow path,
a first surface adjacent to the sealing surface and extending axially along the segment,
a second surface adjacent to the sealing surface and extending axially along the segment,
a coolant supply surface opposite the sealing surface and extending between said first and second surfaces, said coolant supply surface having a plurality of first cooling orifices extending therethrough adjacent said second surface and a plurality of second cooling orifices extending therethrough adjacent said first surface,
a plurality of first cooling passages extending from the first surface toward the second surface and located between said sealing surface and said coolant supply surface, each of said first cooling passages intersecting the first surface and terminating short of said second surface, and each of said first cooling passages communicating with a supply of cooling air in the static structure through one of the first cooling orifices,
a plurality of second cooling passages extending from the second surface toward the first surface and located between said sealing surface and said coolant supply each of said second cooling passages intersecting the second surface and terminating short of said first surface, and each of said second cooling passages communicating with said supply of cooling air through one of said second cooling orifices, each of said cooling passages of one of the segments is separated from adjacent cooling passages of said segment by a wall therebetween,
wherein cooling air from said supply flows through said first passages in a first direction and exits said first cooling passages into one of said inter-segment gaps at said first surface and cooling air from said supply flows through said second passages in a second direction counter to said first direction and exits said second cooling passages at said second surface into another of said inter-segment gaps.

WO-A-9527126 further discloses a seal segment for use in a multi-segment seal of a gas turbine engine, said segment comprising:
a sealing surface;
first and second surfaces arranged at opposite ends of said sealing surface;
sets of first and second cooling passages extending through said segment, adjacent passages being separated by a wall, said first cooling passages opening onto said first surface and extending therefrom towards, but terminating short of, said second surface, said second passages opening onto said second surface and extending therefrom towards but terminating short of said first surface, a set of first cooling orifices extending into said first cooling passages at a location adjacent said second surface from a side opposite to said sealing surface; and a set of second cooling orifices extending into said second cooling passages adjacent said first surface from said side.

From a first aspect, the invention provides an annular seal in an axial flow gas turbine engine having an axis of rotation defined therethrough, an annular flow path concentric with said axis for working fluid flowing through at least one turbine stage of said engine, said one turbine stage including a plurality of turbine blades extending radially outward from said axis, and said flow path bounded by a static structure, said seal being secured to said static structure radially outward of said one turbine stage, said seal absorbing heat from said working fluid, said seal comprising:
a plurality of arcuate seal segments extending circumferentially about the flow path, each segment being spaced radially outward from said turbine blades, each segment being spaced circumferentially from each adjacent segment defining an inter-segment gap therebetween, each seal segment including
a sealing surface facing the working medium flow path,
a first surface adjacent to the sealing surface and extending axially along the segment,
a second surface adjacent to the sealing surface and extending axially along the segment,
a coolant supply surface opposite the sealing surface and extending between said first and second surfaces, said coolant supply surface having a plurality of first cooling orifices extending therethrough adjacent said second surface and a plurality of second cooling orifices extending therethrough adjacent said first surface,
a plurality of first cooling passages extending from the first surface toward the second surface and located between said sealing surface and said coolant supply surface, each of said first cooling passages intersecting the first surface and terminating short of said second surface, and each of said first cooling passages communicating with a supply of cooling air in the static structure through one of the first cooling orifices,
a plurality of second cooling passages extending from the second surface toward the first surface and located between said sealing surface and said coolant supply surface each of said second cooling passages intersecting the second surface and terminating short of said first surface, and each of said second cooling passages communicating with said supply of cooling air through one of said second cooling orifices, each of said cooling passages of one of the segments is separated from adjacent cooling passages of said segment by a wall therebetween,
wherein cooling air from said supply flows through said first passages in a first direction and exits said first cooling passages into one of said inter-segment gaps at said first surface and cooling air from said supply flows through said second passages in a second direction counter to said first direction and exits said second cooling passages at said second surface another of said inter-segment gaps, and wherein each of the first cooling passages includes at least one resupply orifice positioned between the first cooling orifice and said first surface and each of the second cooling passage includes at least one resupply orifice positioned between the second cooling orifice and said second surface, and each of said passages communicating with the supply of cooling air through the resupply orifice(s) therein.

From a second aspect, the invention provides an arcuate seal segment for use in a multi-segment seal of a gas turbine engine, said segment comprising:
a sealing surface;
first and second surfaces arranged at opposite ends of said sealing surface;
sets of first and second cooling passages extending through said segment, adjacent passages being separated by a wall, said first cooling passages opening onto said first surface and extending therefrom towards, but terminating short of, said second surface, said second passages opening onto said second surface and extending therefrom towards but terminating short of said first surface, a set of first cooling orifices extending into said first cooling passages at a location adjacent said second surface from a side opposite to said sealing surface; and a set of second cooling orifices extending into said second cooling passages adjacent said first surface from said side, wherein each of the first cooling passages includes at least one resupply orifice positioned between the first cooling orifice and said first surface and each of the second cooling passage includes at least one resupply orifice positioned between the second cooling orifice and said second surface, and each of said passages communicating with said surface through the resupply orifice(s) therein.

From a third aspect, the invention provides a method of making a seal segment for an axial flow gas turbine engine, said method comprising:
providing a shell having
a mold pattern of a sealing surface,
a mold pattern of a first surface adjacent to the mold pattern of the sealing surface and extending along the shell,
a mold pattern of a second surface adjacent to the mold pattern of the sealing surface and extending along the shell parallel to the mold pattern of the first surface,
a mold pattern of two supports, each mold pattern extending from one of the mold patterns for the first or second surface, and
a mold pattern of a third surface opposite the mold pattern of the sealing surface and extending between the mold pattern of the two supports;
providing a core having
mold patterns for a plurality of first cooling passages extending from a first end of the core and terminating short of a second end of the core opposite the first end thereof, the mold pattern for each ofthe first cooling passages having a mold pattern for a first cooling orifice adjacent the first end of the core,
mold patterns for a plurality of second cooling passages extending from the second end of the core and terminating short of the first end thereof, the mold pattern for each of the second cooling passages having a mold pattern for a second cooling orifice adjacent the second end of the core;
placing the core into the shell such that the mold patterns for the cooling orifices bear upon the mold pattern of the third surface of the shell, and the mold patterns of the first cooling passages bear upon the mold patterns of the first surface, and the mold patterns of the second cooling passages bear upon the mold patterns of the second surface;
introducing molten material into the shell;
solidifying the material;
removing the shell from the solidified material; and
leaching the core from within the solidified material.

Accordingly, this invention provides a cooling and manufacturing enhancement for a gas turbine engine outer air seal. The preferred seal is made up of a plurality of seal segments which provide convective cooling in a counter-flow array, internal heat transfer augmentation through the use of boundary layer trip strips, coolant Mach number control through the use of tapered convective channels, inter-segment purge without additional secondary cooling air, and are castable. The counter-flow design increases thermal effectiveness, reduces circumferential temperature gradients, and locates hot spots away from the inter-segment gaps. The use of spent coolant to cool and purge the inter-segment gaps eliminates the requirement for dedicated secondary cooling air, increasing turbine efficiency.

The geometry of the seal in this disclosure is variable. The seal segments may be coated with thermal barrier and/or abradable coatings. The thermal barrier coating could be applied to portions ofthe seal segment to insulate the metal and reduce cooling air requirements to these portions. The abradable coating could be applied to the seal segment in the blade rub zone to maintain close clearances, improving the turbine efficiency. For extremely high temperature applications, the convective cooling within the seal segments can be augmented with film cooling from the internal cooling air flow passages therein.

Some preferred embodiments of the invention will now be described, by way of example only, with reference to the accompanying drawings in which:

Figure 1 is a cross-sectional view of a portion of a gas turbine engine incorporating a seal of the present invention.

Figure 2 is an isolated view of certain components of the view of Figure 1.

Figure 3 is a cross-sectional view taken along line 3-3 of Figure 2.

Figure 4a is a cross-sectional view taken along line 4a-4a of Figure 3.

Figure 4b is a cross-sectional view taken along line 4b-4b of Figure 3.

Figure 5 is a view of another embodiment of the present invention similar to the view of Figure 3.

Figure 6 is a cross-sectional view taken along line 6-6 of Figure 5.

Figure 7 is a view of a third embodiment of the present invention.

Figure 8 is plan view of the third embodiment of the present invention taken along line 8-8 of Figure 7.

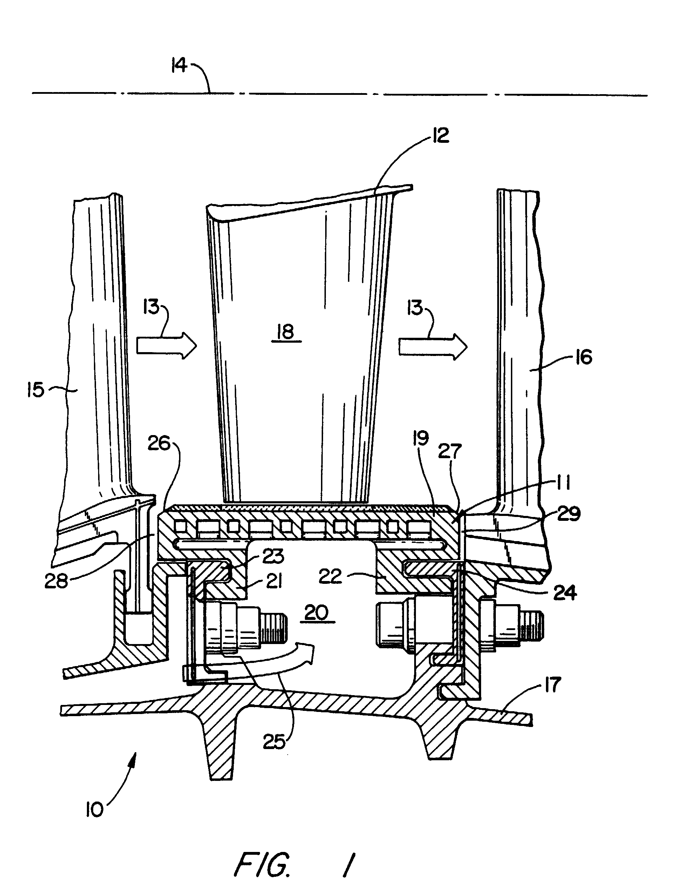

Figure 1 shows a portion of an axial flow gas turbine engine 10 having an axis of rotation 14 defined therethrough and incorporating a seal 11 of the present invention. A portion of one stage 12 of the turbine of the engine 10 is shown in Figure 1 and includes an annular flow path 13 disposed about the axis 14 for the combustion gases that are the working fluid of the engine. The turbine stage 12 has one stator assembly 16 axially downstream thereof. The stators 15, 16 includes an outer case 17. The outer case 17 extends circumferentially around the flow path 14 of working fluid.

The turbine stage 12 has a plurality of rotor blades, which are represented by the single rotor blade 18 in Figure 1, that extend radially outward relative to the axis 14 across the flow path 13 into close proximity with the outer case 17. An outer air seal 11 made up of a plurality of arcuate seal segments (represented by the single seal segment 19 in Figure 1) extends about the axis 14 to bound the annular flow path 13, and the seal 11 circumscribes the tips of the rotor blades 18. The outer air seal 11 is spaced radially inwardly from the outer case 17 leaving a circumferentially extending cavity 20 therebetween. The cavity 20 is in flow communication with a source of cooling air (not shown) and for cooling the segments 19 of the seal 11 as discussed below. Each arcuate seal segment 19 has an upstream hook 21 and a downstream hook 22 to engage upstream and downstream supports 23, 24, respectively, which extend inwardly from the outer case 17. The supports 23, 24 are attached to the outer case 17 to support and position the outer air seal 11 about the rotor blades 18. Each support 23, 24 may be segmented to reduce the hoop strength of the support 23, 24.

A first flow path 25 for cooling air extends inwardly of the outer case 17. The cooling air flow path is bounded by the outer case 17 and extends through the engine outwardly of the flow path 13 of the working fluid. The cooling air flow path extends into the cavity 20 between the outer air seal 11 and the outer case 17.

Each seal segment 19 ofthe outer air seal 11 has a leading edge 26 and a trailing edge 27. The leading edge 26 is in spaced relation to the adjacent stator assembly 15 leaving a circumferentially extending cavity 28 therebetween. The cavity 28 forms a second cooling air flow path which extends axially and circumferentially beneath the leading edge region. The trailing edge 27 is in spaced relation to adjacent stator assembly 16 leaving an annular cavity 29 therebetween which forms a third cooling air flow path.

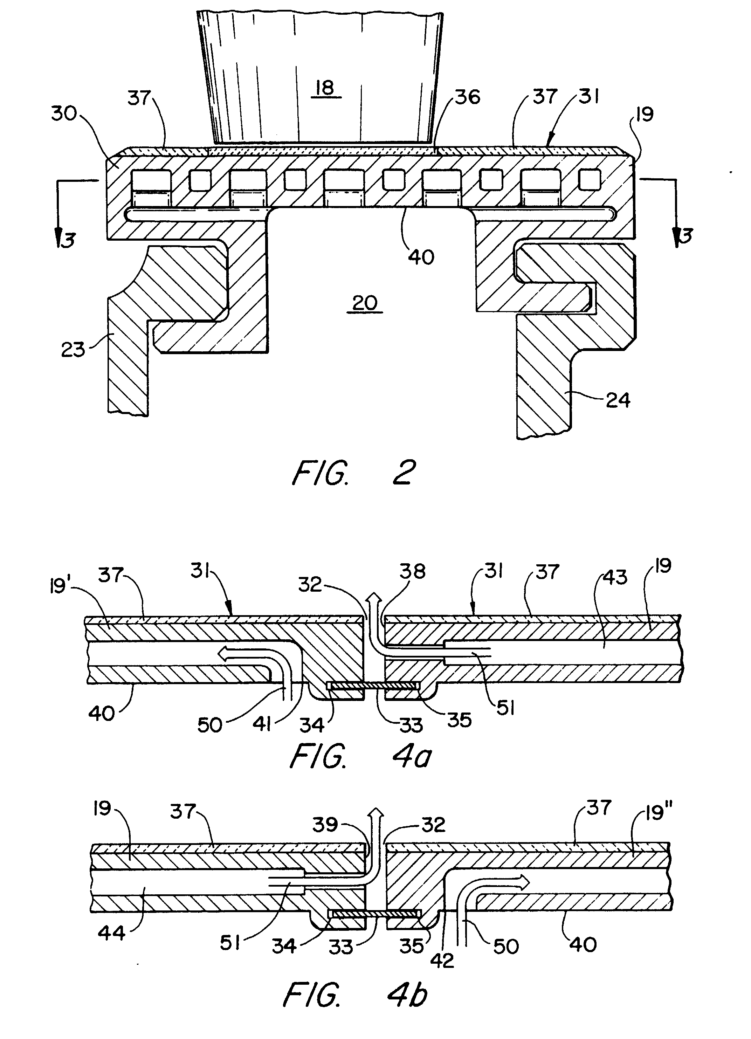

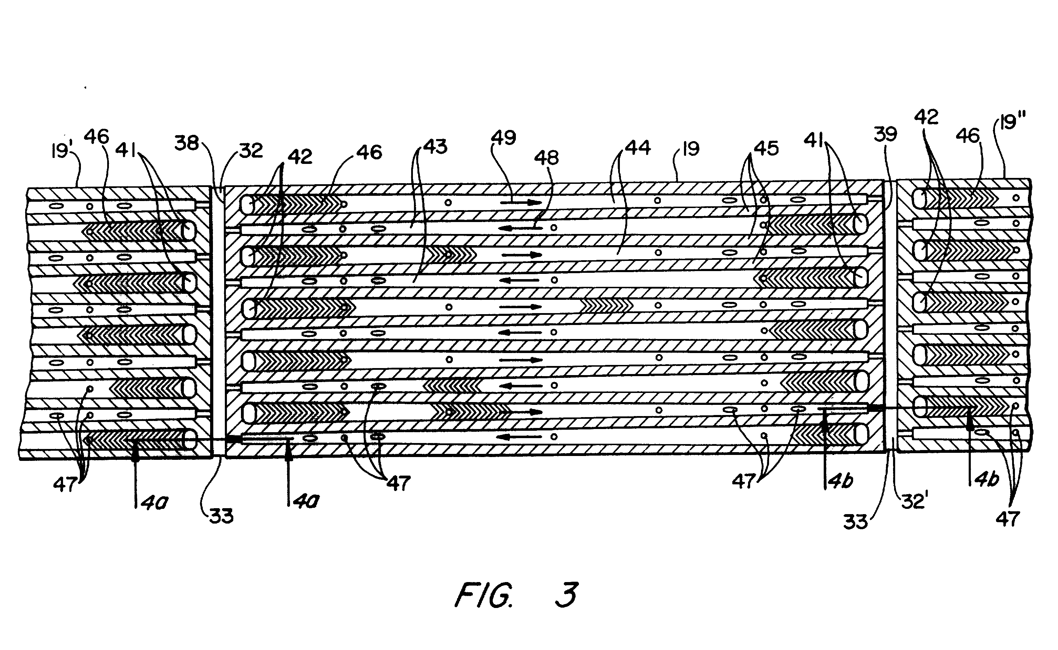

Figure 2 shows a view, in isolation, of the outer air seal segment 19, supports 23, 24, and rotor blade 18 of Figure 1, and Figure 3 shows a cross-sectional view of three adjacent arcuate seal segments 19, 19' 19" taken along the line 3-3 of Figure 2. Each seal segment 19 has a metallic base 30 that has an arcuate sealing surface 31 that extends circumferentially about the axis 14. The adjacent seal segments 19, 19'; 19" are spaced circumferentially from each other leaving an inter-segment gap 32, 32' therebetween as shown in Figure 3. The inter-segment gap 32, 32' varies in size under operative conditions of the engine 10. An inter-segment seal 33 extends axially between the segments 19, 19'; 19" and laterally across the width of the inter-segment gap 32, as shown in Figure 4. The inter-segment seal 33 is slidably received in grooves 34, 35 in the adjacent segments 19, 19', 19"..

As those skilled in the art will readily appreciate, due to the extremely high temperature of the working fluid, the segments 19 of the outer air seal 11 absorb heat from the working fluid. Since the metallic base 30 is made of a material that would have relatively low creep strength at the temperature of the working fluid, each of the segments 19 must be cooled to maintain the temperature of the metallic base 30 well below the temperature of the working fluid.

Referring again to Figure 2, the sealing surface 31 of each segment faces the turbine blades 18 and the working medium flow path 13. A portion of the sealing surface 31 of each segment 19 preferably includes a coating of an abradable material 36, and another portion of the sealing surface 31 preferably includes a coating of a thermal barrier material 37, as shown in Figure 2. Such abradable and thermal barrier materials are well known in the art, and therefore are not detailed further in this disclosure. A first surface 38 of each segment 19 adjacent to the sealing surface 31 thereof extends axially along the each segment 19 relative to the axis 14. A second surface 39 of each segment 19 opposite the first surface 38 and adjacent to the sealing surface 31 also extends axially along the same segment 19. Opposite the sealing surface 31 is a coolant supply surface 40 that is parallel to, but offset from, the sealing surface 31. The coolant supply surface extends between the first and second surfaces 38, 39, and the coolant supply surface 40 has a plurality of cooling orifices extending therethrough. A first group of the cooling orifices 41 are located adjacent the second surface 39, and a second group of cooling orifices 42 extend through the coolant supply surface 40 adjacent to first surface 38, as shown in Figure 3. These orifices 41, 42 are sized to meter the flow of cooling air therethrough based on the supply pressure of the cooling air and the desired heat transfer from the seal segments 19. In the embodiment shown in Figure 3, all of the orifices 41, 42 have the same flow area.

Each segment 19 has a plurality of cooling passages located between the sealing surface 31 and the coolant supply surface 40, as shown in Figure 3. A first group of the cooling passages 43 extend from the first surface 38 toward the second surface 39, and each of these cooling passages 43 intersects the first surface 38 and terminates short of said second surface 39. Each of the first group of cooling passages 43 communicates with the supply of cooling air in the cavity 20 of the static structure through one of the first group of cooling orifices 41. A second group of the cooling passages 44 extends from the second surface 39 toward the first surface 38, and each of these cooling passages intersects the second surface 39 and terminates short of the first surface 38. Each of the second group of cooling passages 44 communicates with the supply of cooling air through the cavity 20 in the static structure through one of one of the second group of cooling orifices 42. As shown in Figure 3, each of the cooling passages 43, 44 within each segment 19 is separated from adjacent cooling passages by a wall 45 that runs the length of the passage.

As shown in Figure 3, the cooling passages within a given segment alternate between first group 43 and second group 44 cooling passages, such that most of the first group of cooling passages 43 are interposed with most of the cooling passages of the second group 44. In the preferred embodiment, only the cooling passages immediately adjacent the leading and trailing edges 26, 27 of the segment 19 are not interposed with cooling passages of the other group. The inner surface of each of the cooling passages has trip-strips 46 along the length thereof to enhance heat transfer between the cooling air and the seal segment 19. As those skilled in the art will readily appreciate, the use of trip-strips in the coolant boundary layer creates regenerative turbulence, increasing heat transfer coefficient and the absorption of heat from the segment 19 by the cooling air.

If the cooling passages 43, 44 of the present invention had constant flow area along the length thereof, as the cooling air flowed through one of the passages the cooling air would heat up and the Mach number of the cooling air would decrease. This decrease in Mach number would result in a decreasing coefficient of heat transfer along the length of each passage. To prevent that from occurring, preferred embodiments of the present invention incorporate tapered cooling passages 43, 44 that increase the cooling air Mach number as the cooling air heats up, thereby maintaining high heat transfer coefficients and high heat transfer rates along the length of each cooling passage. Accordingly, for each segment 19, each of the cooling passages of the first group 43 tapers from a first flow area immediately adjacent one of the first cooling orifices 41 to a second flow area adjacent the first surface 38, and each of the cooling passages of the second group 44 tapers from the first flow area immediately adjacent one of the second cooling orifices 42 to the second flow area adjacent the second surface 39. The taper is designed to increase Mach number of the cooling air as the cooling air flows through the cooling passages and absorbs heat.

This invention is not intended to be limited to cooling passages having a flow area taper ofa specific ratio, since, as those skilled in the art will readily appreciate, the actual flow area of each passage at a particular position along the length thereof depends on the rate and pressure at which cooling air is supplied to the cooling passages, the rate of heat transfer from the working fluid through the segment at engine operating conditions, and the desired heat transfer from each segment. The thermal environment, cooling air flow goals, and manufacturing restrictions dictate the number of passages. The geometry and number of trip-strips, and degree of passage taper for Mach number recovery are dictated by the particular gas turbine engine application.

Each of the cooling passages 43,44 of each segment 19 includes one or more resupply orifices 47 along the length thereof. Thus each of the cooling passages of the first group 43 has at least one resupply orifice 47 between the cooling orifice 41 in communication therewith and the first surface 38, and each of the cooling passages of the second group 44 includes at least one resupply orifice 47 between the second cooling orifice 42 in communication therewith and the second surface 39. Each of the cooling passages 43, 44 communicates with the supply of cooling air in the cavity 20 through the resupply orifice 47 located therein. The cooling air is thus resupplied or reinforced in each passage 43, 44 at one or more locations in order to regenerate passage flow and provide adequate cooling air outflow for cooling the first and second surfaces 38, 39 of each segment 19 and providing adequate purge of the inter-segment gap 32.

In view of the foregoing discussion, it should now be apparent that, within a particular segment 19, the cooling air from the supply in the cavity 20 flows through the first group of cooling passages 43 in one direction 48 and exits into the inter-segment gap 32 at the first surface thereof 38, and cooling air from the supply flows through the second group of cooling passages 44 in the opposite direction 49 and exits at the second surface 39 into the inter-segment gap 32' adjacent the second surface 39 thereof. Each segment 19 is thus cooled by counter-flowing cooling air flowing within the cooling passages 43, 44.

The cooling air flow that cools and purges the inter-segment gap 32 is shown in Figures 4a and 4b, which show cross-sectional views taken along line 4a-4a and 4b-4b of Figure 3. Figures 4a and 4b show the inter-segment seal 33 between adjacent seal segments 19, 19', 19", the flow path 50 of cooling air flowing into a cooling passage through one of the cooling orifices 41, and the flow path 51 of cooling air exiting one of the cooling passages and purging the inter-segment gap 32. The inter-segment seal 33 prevents the spent cooling air from flowing radially outward within the inter-segment gap 32, thereby directing the spent cooling air into the annular flow path 13 of the working fluid of the engine 10.

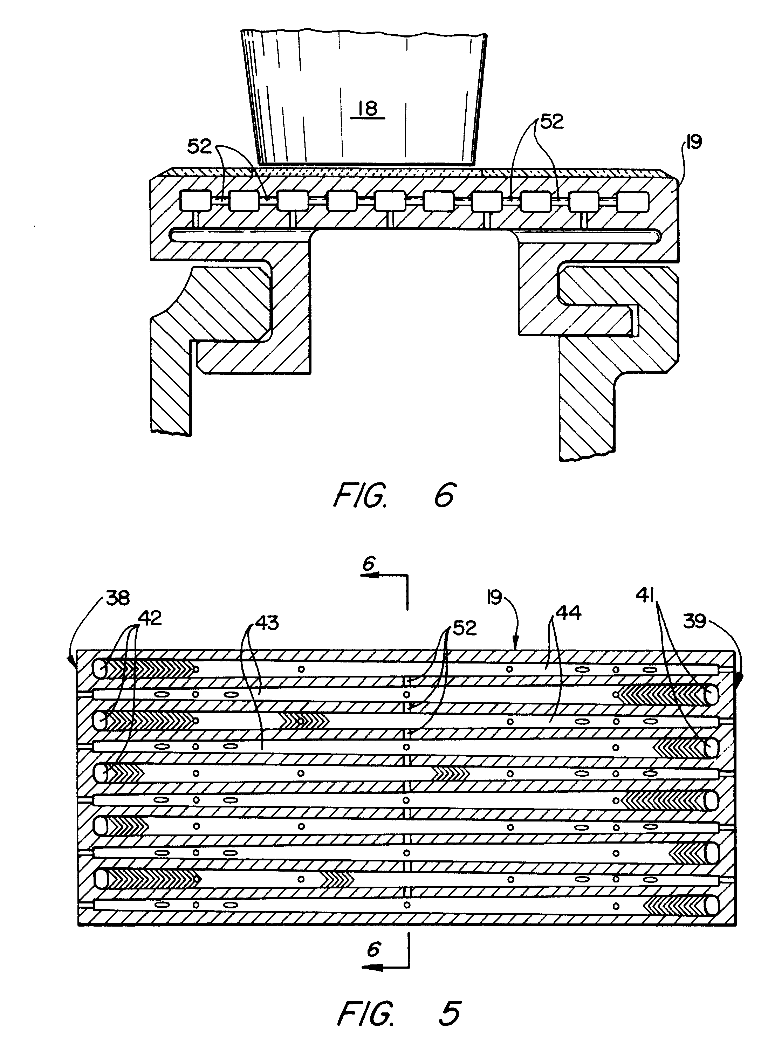

Figures 5-8 show additional features that may be incorporated into the seal segments 19 of the present invention depending on the specific environment in which the seal 11 is to be used. Figure 5 shows a view similar to the view of Figure 3, but showing only one seal segment 19. Figure 6 is a cross-sectional view taken along the midspan of the seal segment 19, corresponding to line 6-6 of Figure 5. As shown in Figures 5 and 6, each of the walls 45 has a cross-supply orifice 52, and each cooling passage 43, 44 communicates with immediately adjacent cooling passages through one of these cross-supply orifices 52. The cross-supply holes provide for the crossflow of cooling air between the cooling passages 43, 44 in the event that the flow within a particular passage should decrease, as in the case where the metering orifice of a cooling passage is partially obstructed by a foreign object that migrated from the cooling air supply and through the cavity 20 to the seal segment 19.

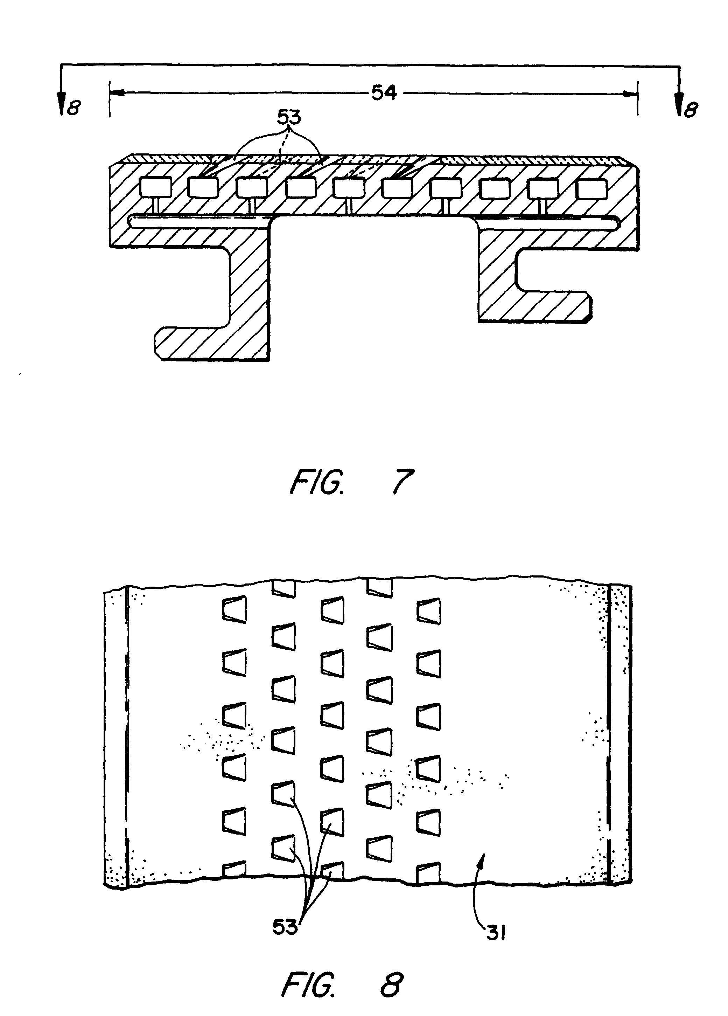

Figures 7 and 8 show a seal segment 19 of the present invention incorporating a plurality of film cooling holes 53 in the portion 36 of the sealing surface 31 of each segment 19 that is coated with an abradable material. Some of the cooling passages communicate with the sealing surface 31 through these film cooling holes 53, so that some of the cooling air flowing through these cooling passages flows into contact with sealing surface 31 through the film cooling holes 53, thereby protecting the sealing surface 31 from direct contact with the high temperature working fluid.

In operation, cooling air flows into the tapered cooling passages 43, 44 of the present invention through the metering orifices 41, 42 located at each end 38, 39 of the seal segment 19. The cooling air then flows over the trip-strips 46, which create turbulence in the boundary layer and increase the internal heat transfer coefficient of the cooling air. As the cooling air flows through the cooling passages 43, 44 and heats up, the taper thereof increases the Mach number, thereby maintaining high heat transfer coefficients. The spent cooling air is then dumped into one of the inter-segment gaps 32 to provide cooling and purge thereof. The size of the metering orifices can be varied for individual cooling passage flow control, adding the capability to match the cooling potential to heat flux by increasing the cooling air flow to the "hot spots" along the axial chord 54 of each segment 19, and decreasing the coolant flow to "cool spots", thereby reducing the over-all cooling air flow requirement. The counter-flow design of the seal segment 19 increases thermal effectiveness, reduces circumferential temperature gradients, and locates the hot spots away from the inter-segment gap 32.

The seal segment 19 of the present invention can be fabricated by providing a shell and core having the desired dimensions of the seal segment 19 as described above, including a shell having a mold pattern of a sealing surface, a mold pattern of a first surface adjacent to the mold pattern of the sealing surface and extending along the shell, a mold pattern of a second surface adjacent to the mold pattern of the sealing surface and extending along the shell parallel to the mold pattern of the first surface, a mold pattern of two supports, each mold pattern extending from one of the mold patterns for the first or second surface, and a mold pattern of a third surface opposite the mold pattern of the sealing surface and extending between the mold pattern of the two supports.

The core for the shell must have mold patterns for a plurality of first cooling passages extending from a first end of the core and terminating short of a second end of the core opposite the first end thereof, the mold pattern for a first cooling orifice adjacent the first end of the core, mold patterns for a plurality of second cooling passages extending from the second end of the core and terminating short of the first end thereof, and the mold pattern for each of the second cooling passages having a mold pattern for a second cooling orifice adjacent the second end of the core. The core may additionally have the mold patterns for each of the cooling passages connected at the midspan of the core by a mold pattern for a plurality of cross-supply holes, and each of the mold patterns for the cooling passages may also have a mold pattern for a resupply orifice, and each of the mold patterns for the cooling passages may have a mold pattern for a film cooling hole.

The core is then placed into the shell such that the mold patterns for the cooling orifices bear upon the mold pattern of the third surface of the shell, and the mold patterns of the first cooling passages bear upon the mold patterns of the second surface. If the mold patterns for the resupply orifices were included in the mold patterns for the cooling passages, the mold patterns for the resupply orifices will bear upon the mold pattern for the third surface during the step of placing the core into the shell. Likewise, if the mold patterns for the film cooling holes were included in the mold patterns for the cooling passages, the mold patterns for the film cooling holes will bear upon the mold pattern for the sealing surface during the step of placing the core into the shell.

Molten material is then introduced into the shell, the material is solidified by cooling, the shell is removed from the solidified material, and the core is then leached from within the solidified material. The cross-supply holes aid in casting of the segment by providing lateral support between the passage pieces of the casting core the midsection of the core. The casting core is also supported at the ends of each passage and at the cooling air resupply orifice locations. The multiple core support locations also ease core leachability by providing intermediate penetration locations.

Although this invention has been shown and described with respect to a detailed embodiment thereof, it will be understood by those skilled in the art that various changes in form and detail thereof may be made without departing from the scope of the claimed invention.

## Claims

1. An annular seal (11) in an axial flow gas turbine engine having an axis of rotation (14) defined therethrough, an annular flow path (13) concentric with said axis for working fluid flowing through at least one turbine stage of said engine, said one turbine stage including a plurality of turbine blades (18) extending radially outward from said axis, and said flow path bounded by a static structure, said seal being secured to said static structure radially outward of said one turbine stage, said seal absorbing heat from said working fluid, said seal comprising:
a plurality of arcuate seal segments (19,19',19") extending circumferentially about the flow path, each segment being spaced radially outward from said turbine blades, each segment being spaced circumferentially from each adjacent segment defining an inter-segment gap (32,32') therebetween, each seal segment including
a sealing surface (31) facing the working medium flow path,
a first surface (38) adjacent to the sealing surface and extending axially along the segment,
a second surface (39) adjacent to the sealing surface (31) and extending axially along the segment,
a coolant supply surface (40) opposite the sealing surface (31) and extending between said first (38) and second (39) surfaces, said coolant supply surface having a plurality of first cooling orifices (41) extending therethrough adjacent said second surface (39) and a plurality of second cooling orifices (42) extending therethrough adjacent said first surface (38),
a plurality of first cooling passages (43) extending from the first surface (38) toward the second surface (39) and located between said sealing surface (31) and said coolant supply surface (40), each of said first cooling passages (43) intersecting the first surface (36) and terminating short of said second surface (39), and each of said first cooling passages (42) communicating with a supply of cooling air in the static structure through one of the first cooling orifices (41),
a plurality of second cooling passages (44) extending from the second surface (39) toward the first surface (38) and located between said sealing surface (31) and said coolant supply (40) each of said second cooling passages (44) intersecting the second surface (39) and terminating short of said first surface (38), and each of said second cooling passages (44) communicating with said supply of cooling air through one of said second cooling orifices (42), each of said cooling passages of one of the segments is separated from adjacent cooling passages of said segment by a wall (45) therebetween,
wherein cooling air from said supply flows through said first passages (43) in a first direction and exits said first cooling passages (43) into one of said inter-segment gaps (32) at said first surface (38) and cooling air from said supply flows through said second passages (44) in a second direction counter to said first direction and exits said second cooling passages (44) at said second surface (39) into another of said inter-segment gaps (32'), and wherein each of the first cooling passages (43) includes at least one resupply orifice (47) positioned between the first cooling orifice (41) and said first surface (38) and each ofthe second cooling passage (44) includes at least one resupply orifice (47) positioned between the second cooling orifice (42) and said second surface (37), and each of said passages (43,44) communicating with the supply of cooling air through the resupply orifice(s) (47) therein.

2. An arcuate seal segment (19) for use in a multi-segment seal of a gas turbine engine, said segment comprising:
a sealing surface (31);
first and second surfaces (38, 39) arranged at opposite ends of said sealing surface (31);
sets of first and second cooling passages (43, 44) extending through said segment, adjacent passages being separated by a wall (45), said first cooling passages (43) opening onto said first surface (38) and extending therefrom towards, but terminating short of, said second surface (39), said second passages (44) opening onto said second surface (39) and extending therefrom towards but terminating short of said first surface (38), a set of first cooling orifices (41) extending into said first cooling passages (43) at a location adjacent said second surface (39) from a side (40) opposite to said sealing surface (31); and a set of second cooling orifices (42) extending into said second cooling passages (44) adjacent said first surface (38) from said side (40), wherein each of the first cooling passages (43) includes at least one resupply orifice (47) positioned between the first cooling orifice (41) and said first surface (38) and each ofthe second cooling passage (44) includes at least one resupply orifice (47) positioned between the second cooling orifice (42) and said second surface (37), and each of said passages (43,44) communicating with said surface (40) through the resupply orifice(s) (47) therein.

3. The seal or seal segment of claims 1 or 2, wherein most of the first cooling passages (43) of each segment (19) are interposed with most of the second cooling passages (44) of said segment.

4. The seal or seal segment of claim 1, 2 or 3, wherein each of the first cooling passages (43) tapers from a first flow area immediately adjacent one of the first cooling orifices (41) to a second flow area adjacent the first surface (38) and each of the second cooling passages (44) tapers from said first flow area immediately adjacent one of the second cooling orifices (42) to said second flow area adjacent the second surface (39), said taper being designed to increase Mach number of the cooling area as the cooling air flows through the cooling passages and absorbs heat.

5. The seal or seal segment of any of claims 1 to 4 wherein each of the cooling passages has trip-strips (46) along the length thereof to enhance absorption of heat by the cooling air.

6. The seal or seal segment of any preceding claim wherein a portion (37) of the sealing surface (31) of the or each segment (19) includes a thermal barrier material.

7. The seal or seal segment of any preceding claim wherein each of the walls (45) has a cross-supply orifice (52), and each cooling passage communicates with immediately adjacent cooling passages through one of said cross-supply orifices.

8. The seal or seal segment of any preceding claim wherein a portion (36) of the sealing surface (31) of the or each segment (19) includes a coating of an abradable material.

9. The seal or seal segment of claim 8, wherein the portion (36) of the sealing surface of each segment that includes an abradable material has a plurality of film cooling holes (53) therein, and some of said cooling passages communicate with the sealing surface (31) through said film cooling holes (53) so that some of the cooling air flowing through said some of said cooling passages flows into contact with said sealing surface (31) through said film cooling holes (53) and provides film cooling of the segment thereby protecting the sealing surface from direct contact with the working fluid.

10. An annular seal comprising a plurality of seal segments as claimed in any of claims 2 to 9.

11. A method of making a seal segment for an axial flow gas turbine engine, said method comprising:
providing a shell having
a mold pattern of a sealing surface,
a mold pattern of a first surface adjacent to the mold pattern of the sealing surface and extending along the shell,
a mold pattern of a second surface adjacent to the mold pattern of the sealing surface and extending along the shell parallel to the mold pattern of the first surface,
a mold pattern of two supports, each mold pattern extending from one of the mold patterns for the first or second surface, and
a mold pattern of a third surface opposite the mold pattern of the sealing surface and extending between the mold pattern of the two supports;
providing a core having
mold patterns for a plurality of first cooling passages extending from a first end of the core and terminating short of a second end of the core opposite the first end thereof, the mold pattern for each of the first cooling passages having a mold pattern for a first cooling orifice adjacent the first end of the core,
mold patterns for a plurality of second cooling passages extending from the second end of the core and terminating short of the first end thereof, the mold pattern for each of the second cooling passages having a mold pattern for a second cooling orifice adjacent the second end of the core;
placing the core into the shell such that the mold patterns for the cooling orifices bear upon the mold pattern ofthe third surface of the shell, and the mold patterns of the first cooling passages bear upon the mold patterns of the first surface, and the mold patterns of the second cooling passages bear upon the mold patterns of the second surface;
introducing molten material into the shell;
solidifying the material;
removing the shell from the solidified material; and
leaching the core from within the solidified material.

12. The method of claim 11 wherein the mold patterns for each of the cooling passages are connected at the midspan of the core by a mold pattern for a plurality of cross-supply holes.

13. The method of claim 11 or 12 wherein each of the mold patterns for the cooling passages includes a mold pattern for a resupply orifice that bears upon said mold pattern for said third surface during the step of placing the core into the shell.

14. The method of claim 11, 12 or 13 wherein each of the mold patterns for the cooling passages includes a mold pattern for a film cooling hole that bears upon said mold pattern for said sealing surface during the step of placing the core into the shell.

## Patentansprüche

1. Ringförmige Dichtung (11) in einer Axialströmungsgasturbinenmaschine mit einer durch diese hindurch definierten Rotationsachse (14) und einem ringförmigen Strömungsweg (13), der zu der Achse konzentrisch ist, für das Strömen von Arbeitsfluid durch mindestens eine Turbinenstufe der Maschine, wobei eine Turbinenstufe eine Mehrzahl von Turbinenlaufschaufeln (18) aufweist, die sich radial von der Achse nach außen erstreckt, und wobei der Strömungsweg von einer statischen Struktur begrenzt ist, wobei die Dichtung an der statischen Struktur radial außerhalb der einen Turbinenstufe befestigt ist, wobei die Dichtung von dem Arbeitsfluid Wärme absorbiert und aufweist:
eine Mehrzahl gekrümmter Dichtungssegmente (19, 19', 19"), die sich umfangsmäßig um den Strömungsweg erstrecken, wobei jedes Segment radial nach außen von den Turbinenlaufschaufeln beabstandet ist und umfangsmäßig von jedem benachbarten Segment einen Zwischensegmentspalt (32, 32') dazwischen definierend von jedem benachbarten Segment beabstandet ist, wobei jedes Segment aufweist
eine Dichtungsfläche (31), die zu dem Arbeitsmediumströmungsweg gerichtet ist,
eine erste Fläche (38), die der Dichtungsfläche benachbart ist und sich axial entlang des Segments erstreckt,
eine zweite Fläche (39), die der Dichtungsfläche (31) benachbart ist und sich axial entlang des Segments erstreckt,
eine Kühlmittelzuführfläche (40), die der Dichtungsfläche (31) entgegengesetzt ist und sich zwischen der ersten (38) und der zweiten (39) Fläche erstreckt, wobei die Kühlmittelzuführfläche eine Mehrzahl erster Kühlöffnungen (41) sich dadurch benachbart der zweiten Fläche (39) erstreckend und eine Mehrzahl zweiter Kühlöffnungen (42) sich dadurch benachbart der ersten Fläche (38) erstreckend aufweist,
eine Mehrzahl erster Kühlpassagen (43), die sich von der ersten Fläche (38) in Richtung zu der zweiten Fläche (39) erstrecken und zwischen der Dichtungsfläche (31) und der Kühlmittelzuführfläche (40) angeordnet sind, wobei jede der ersten Kühlpassagen (43) die erste Fläche (36) schneidet und kurz vor der zweiten Fläche (39) endet und wobei jede der ersten Kühlpassagen (42) mit einer Zufuhr von Kühlluft in der statischen Struktur durch eine der ersten Kühlöffnungen (41) kommuniziert,
eine Mehrzahl von zweiten Kühlpassagen (44), die sich von der zweiten Fläche (39) in Richtung zu der ersten Fläche (38) erstrecken und zwischen der Dichtungsfläche (31) und der Kühlmittelzufuhr (40) angeordnet sind, wobei jede der zweiten Kühlpassagen (44) die zweite Fläche (39) schneidet und kurz vor der ersten Fläche (38) endet und wobei jede der zweiten Kühlpassagen (44) mit der Zufuhr von Kühlluft durch eine der zweiten Kühlöffnungen (42) kommuniziert, wobei jede der Kühlpassagen von einem der Segmente von benachbarten Kühlpassagen des Segments durch eine Wand (45) dazwischen getrennt ist,
wobei Kühlluft von der Zufuhr durch die erste Passage (43) in eine erste Richtung strömt und die ersten Kühlpassagen (43) in einen der Zwischensegmentspalte (32) an der ersten Fläche (38) verläßt und Kühlluft von der Zufuhr durch die zweiten Passagen (44) in eine zweite Richtung entgegengesetzt zu der ersten Richtung strömt und die zweiten Kühlpassagen (44) an der zweiten Fläche (39) in einen anderen der Zwischensegmentspalte (32') verläßt, und wobei jede der ersten Kühlpassagen (43) mindestens eine Nachführöffnung (47) aufweist, die zwischen der ersten Kühlöffnung (41) und der ersten Fläche (38) positioniert ist, wobei jede der zweiten Kühlpassagen (44) mindestens eine Nachführöffnung (47) aufweist, die zwischen der zweiten Kühlöffnung (42) und der zweiten Fläche (37) positioniert ist, und jede der Passagen (43, 44) mit der Zufuhr von Kühlluft durch die Nachführöffnung(en) (47) darin kommuniziert.

2. Gekrümmtes Dichtungssegment (19) zur Verwendung in einer Mehrsegment-Dichtung einer Gasturbinenmaschine, wobei das Segment aufweist:
eine Dichtungsfläche (31);
eine erste und eine zweite Fläche (38, 39), die an entgegengesetzten Enden der Dichtungsfläche (31) angeordnet sind;
Sätze erster und zweiter Kühlpassagen (43, 44), die sich durch das Segment erstrecken, wobei benachbarte Passagen von einer Wand (45) getrennt sind, wobei erste Kühlpassagen (43) sich zu der ersten Fläche (38) öffnen und sich von dort in Richtung auf die zweite Fläche (39) erstrecken, aber kurz vorher enden, wobei zweite Passagen (44) sich an der zweiten Fläche (39) öffnen und sich von dort in Richtung auf die erste Fläche (38) erstrecken, aber kurz vorher enden,
ein Satz erster Kühlöffnungen (41), die sich in die ersten Kühlpassagen (43) an einem der zweiten Fläche (39) benachbarten Ort von einer Seite (40) entgegegesetzt zu der Dichtungsfläche (31) erstrecken; und
ein Satz zweiter Kühlöffnungen (42), die sich in die zweiten Kühlpassagen (44) der ersten Fläche (38) benachbart von der Seite (40) erstrecken, wobei jede der ersten Kühlpassagen (43) mindestens eine Nachführöffnung (47) aufweist, die zwischen der ersten Kühlöffnung (41) und der ersten Fläche (38) positioniert ist, und wobei jede der zweiten Kühlpassagen (44) mindestens eine Nachführöffnung (47) aufweist, die zwischen der zweiten Kühlöffnung (42) und der zweiten Fläche (37) positioniert ist, und jede der Passagen (43, 44) mit der Fläche (40) durch die Nachführöffnung(en) (47) darin kommuniziert.

3. Dichtung oder Dichtungssegment nach Anspruch 1 oder 2, wobei die meisten der ersten Kühlpassagen (43) eines jeden Segments (19) jeweils zwischen zweiten Kühlpassagen (44) des Segments angeordnet sind und umgekehrt.

4. Dichtung oder Dichtungssegment nach Anspruch 1, 2 oder 3, wobei jede der ersten Kühlpassagen (43) sich von einem ersten Strömungsbereich unmittelbar einer der ersten Kühlöffnungen (41) benachbart zu einem zweiten Strömungsbereich der ersten Fläche (38) benachbart verjüngt, und wobei sich jede der zweiten Kühlpassagen (44) von dem ersten Strömungsbereich unmittelbar einer der zweiten Kühlöffnungen (42) benachbart zu dem zweiten der zweiten Fläche (39) benachbarten Strömungsbereich verjüngt, wobei die Verjüngung ausgelegt ist, die Mach-Zahl des Kühlbereichs zu erhöhen, wenn die Kühlluft durch die Kühlpassagen strömt und Wärme absorbiert.

5. Dichtung oder Dichtungssegment nach einem der Ansprüche 1 bis 4, wobei jede der Kühlpassagen Stolperstreifen (46) über deren Länge hat, um die Wärmeabsorption durch die Kühlluft zu erhöhen.

6. Dichtung oder Dichtungssegment nach einem der vorangehenden Ansprüche, wobei ein Teil (37) der Dichtungsfläche (31) des oder eines jeden Segments (19) ein Wärmebarrierenmaterial aufweist.

7. Dichtung oder Dichtungssegment nach einem der vorangehenden Ansprüche, wobei jede der Wände (45) eine Querzufuhröffnung (52) aufweist und jede Kühlpassage mit unmittelbar benachbarten Kühlpassagen durch eine der Querzufuhröffnungen kommuniziert.

8. Dichtung oder Dichtungssegment nach einem der vorangehenden Ansprüche, wobei ein Teil (36) der Dichtungsfläche (31) des oder eines jeden Segments (19) eine Beschichtung aus einem abradierbaren Material aufweist.

9. Dichtung oder Dichtungssegment nach Anspruch 8, wobei der Teil (36) der Dichtungsfläche eines jeden Segments, was ein abradierbares Material aufweist, eine Mehrzahl von Filmkühlöffnungen (53) darin hat, und einige der Kühlpassagen mit der Dichtungsfläche (31) durch die Filmkühlöffnungen (53) so kommunizieren, daß etwas von der Kühlluft, die durch diese einigen der Kühlpassagen strömt, in Kontakt mit der Dichtungsfläche (31) durch die Filmkühlöffnungen (53) strömt und dem Segment eine Filmkühlung verschafft und so die Dichtungsfläche vor direktem Kontakt mit dem Arbeitsfluid schützt,

10. Ringförmige Dichtung aufweisend eine Mehrzahl von Dichtungssegmenten nach einem der Ansprüche 2 bis 9.

11. Verfahren zum Herstellen eines Dichtungssegments für eine Axialströmungsgasturbinenmaschine, wobei das Verfahren aufweist:
Bereitstellen einer Schale mit
einem Formbereich einer Dichtungsfläche,
einem Formbereich einer ersten Fläche, der dem Formbereich der Dichtungsfläche benachbart ist und sich entlang der Schale erstreckend,
einen Formbereich einer zweiten Fläche, der dem Formbereich der Dichtungsfläche benachbart ist und sich entlang der Schale parallel zu dem Formbereich der ersten Fläche erstreckt,
einen Formbereich von zwei Abstützungen, wobei jeder Formbereich sich von einem der Formbereiche für die erste oder die zweite Fläche erstreckt, und
einen Formbereich einer dritten Fläche, der dem Formbereich der Dichtungsfläche benachbart ist und sich zwischen dem Formbereich der zwei Abstützungen erstreckt;
Bereitstellen eines Kerns mit
Formbereichen für eine Mehrzahl von ersten Kühlpassagen, die sich von einem ersten Ende des Kerns erstrecken und kurz vor einem zweiten Ende des Kerns entgegengesetzt von dem ersten Ende davon enden, wobei die Formbereiche für jede der ersten Kühlpassagen einen Formbereich für eine erste Kühlöffnung dem ersten Ende des Kerns benachbart haben,
Formbereiche für eine Mehrzahl zweiter Kühlpassagen, die sich von dem zweiten Ende des Kerns erstrecken und kurz vor dessen erstem Ende enden, wobei der Formbereich für jede der zweiten Kühlpassagen einen Formbereich für eine zweite Kühlöffnung dem zweiten Ende des Kerns benachbart hat;
Anordnen des Kerns in der Schale derart, daß die Formbereiche für die Kühlöffnungen auf dem Formbereich der dritten Fläche der Schale aufliegen, und die Formbereiche der ersten Kühlpassagen auf den Formbereichen der ersten Fläche aufliegen, und die Formbereiche der zweiten Kühlpassagen auf den Formbereichen der zweiten Fläche aufliegen;
Einbringen von geschmolzenem Material in die Schale;
Verfestigen des Materials;
Entfernen der Schale von dem verfestigten Material; und
Herausspülen des Kerns aus dem Inneren des verfestigten Materials.

12. Verfahren nach Anspruch 11, wobei die Formbereiche für jede der Kühlpassagen von einem Formbereich für eine Mehrzahl von Querzufuhröffnungen bei der Erstreckungsmitte des Kerns verbunden sind.

13. Verfahren nach Anspruch 11 oder 12, wobei jeder der Formbereiche für die Kühlpassagen einen Formbereich für eine Nachführöffnung aufweist, der auf dem Formbereich für die dritte Fläche während des Schritts des Plazierens des Kerns in der Schale aufliegt.

14. Verfahren nach Anspruch 11, 12 oder 13, wobei jeder der Formbereiche für die Kühlpassagen einen Formbereich für eine Filmkühlöffnung aufweist, die auf dem Formbereich für die Dichtungsfläche während des Schritts des Plazierens des Kerns in der Schale aufliegt.

## Revendications

1. Joint annulaire d'étanchéité (11) dans un turbomoteur à écoulement axial, dans lequel est défini un axe de rotation (14), présentant un chemin annulaire d'écoulement (13), situé de manière concentrique par rapport audit axe, pour le fluide moteur qui s'écoule dans au moins un étage de turbine dudit moteur, ledit un étage de turbine comprenant une pluralité d'aubes de turbine (18) qui s'étendent radialement vers l'extérieur à partir dudit axe, et ledit chemin d'écoulement étant délimité par une structure statique, ledit joint d'étanchéité étant fixé à ladite structure statique radialement à l'extérieur dudit un étage de turbine, ledit joint d'étanchéité absorbant de la chaleur provenant dudit fluide moteur, et ledit joint d'étanchéité comprenant :
une pluralité de segments d'étanchéité (19, 19', 19"), en forme d'arc, s'étendant circonférentiellement autour du chemin d'écoulement, chaque segment étant espacé radialement vers l'extérieur desdites aubes de turbine, chaque segment étant circonférentiellement espacé par rapport à chaque segment adjacent, pour définir entre eux un espace libre (32, 32'), chaque segment d'étanchéité comportant
une surface d'étanchéité (31) faisant face au chemin d'écoulement du fluide moteur,
une première surface (38), adjacente à la surface d'étanchéité et s'étendant axialement le long du segment,
une deuxième surface (39), adjacente à la surface d'étanchéité (31) et s'étendant axialement le long du segment,
une surface d'amenée de fluide de refroidissement (40), située à l'opposé de la surface d'étanchéité (31) et s'étendant entre lesdites première (38) et deuxième (39) surfaces, ladite surface d'amenée de fluide de refroidissement présentant une pluralité de premiers orifices de refroidissement (41) qui la traversent de manière adjacente à ladite deuxième surface (39) et une pluralité de deuxièmes orifices de refroidissement (42) qui la traversent de manière adjacente à ladite première surface (38),
une pluralité de premiers passages de refroidissement (43), qui s'étendent depuis la première surface (38) en direction de la deuxième surface (39) et qui sont situés entre ladite surface d'étanchéité (31) et ladite surface d'amenée de fluide de refroidissement (40), chacun desdits premiers passages de refroidissement (43) coupant la première surface (36) et se terminant juste avant ladite deuxième surface (39), et chacun desdits premiers passages de refroidissement (42) communiquant, par l'intermédiaire de l'un des premiers orifices de refroidissement (41), avec une distribution d'air de refroidissement située dans la structure statique,
une pluralité de deuxièmes passages de refroidissement (44), qui s'étendent depuis la deuxième surface (39) en direction de la première surface (38) et qui sont situés entre ladite surface d'étanchéité (31) et ladite surface d'amenée de fluide de refroidissement (40), chacun desdits deuxièmes passages de refroidissement (44) coupant la deuxième surface (39) et se terminant juste avant ladite première surface (38), et chacun desdits deuxièmes passages de refroidissement (44) communiquant, par l'intermédiaire de l'un desdits deuxièmes orifices de refroidissement (42), avec ladite distribution d'air de refroidissement, chacun desdits passages de refroidissement de l'un des segments étant séparé de passages adjacents de refroidissement dudit segment par une paroi (45) située entre eux,
dans lequel de l'air de refroidissement provenant de ladite distribution circule dans lesdits premiers passages (43) dans une première direction et sort desdits premiers passages de refroidissement (43) pour arriver dans l'un desdits espaces libres (32) entre segments, au niveau de ladite première surface (38), tandis que de l'air de refroidissement provenant de ladite distribution circule dans lesdits deuxièmes passages (44) dans une seconde direction, opposée à ladite première direction, et sort desdits deuxièmes passages de refroidissement (44), au niveau de ladite deuxième surface (39), pour arriver dans un autre desdits espaces libres (32') entre segments, et dans lequel chacun des premiers passages de refroidissement (43) comprend au moins un orifice de réalimentation (47), situé entre le premier orifice de refroidissement (41) et ladite première surface (38), tandis que chacun des deuxièmes passages de refroidissement (44) comprend au moins un orifice de réalimentation (47), situé entre le deuxième orifice de refroidissement (42) et ladite deuxième surface (37), chacun desdits passages (43, 44) communiquant avec la distribution d'air de refroidissement par l'intermédiaire du ou des orifice(s) de réalimentation (47) situés à l'intérieur.

2. Segment d'étanchéité (19) en forme d'arc destiné à être utilisé dans un joint d'étanchéité à segments multiples d'un turbomoteur, ledit segment comprenant :
une surface d'étanchéité (31) ;
des première et deuxième surfaces (38, 39) disposées aux extrémités opposées de ladite surface d'étanchéité (31) ;
des groupes de premiers et deuxièmes passages de refroidissement (43, 44) qui s'étendent à travers ledit segment, des passages adjacents étant séparés par une paroi (45), lesdits premiers passages de refroidissement (43) s'ouvrant sur ladite première surface (38) et s'étendant à partir de celle-ci en direction de ladite deuxième surface (39) mais se terminant juste avant celle-ci, lesdits deuxièmes passages (44) s'ouvrant sur ladite deuxième surface (39) et s'étendant à partir de celle-ci en direction de ladite première surface (38) mais se terminant juste avant celle-ci, un groupe de premiers orifices de refroidissement (41) se prolongeant par lesdits premiers passages de refroidissement (43) en un emplacement adjacent à ladite deuxième surface (39), à partir d'un côté (40) situé à l'opposé de ladite surface d'étanchéité (31) ; et un groupe de deuxièmes orifices de refroidissement (42) se prolongeant par lesdits deuxièmes passages de refroidissement (44), de façon adjacente à ladite première surface (38), à partir dudit côté (40), dans lequel chacun desdits premiers passages de refroidissement (43) comprend au moins un orifice de réalimentation (47), situé entre le premier orifice de refroidissement (41) et ladite première surface (38), tandis que chacun des deuxièmes passages de refroidissement (44) comprend au moins un orifice de réalimentation (47), situé entre le deuxième orifice de refroidissement (42) et ladite deuxième surface (37), chacun desdits passages (43, 44) communiquant avec ladite surface (40) par l'intermédiaire du ou des orifice(s) de réalimentation (47) situés à l'intérieur.

3. Joint d'étanchéité ou segment d'étanchéité selon la revendication 1 ou 2, dans lequel la plupart des premiers passages de refroidissement (43) de chaque segment (19) sont intercalés avec la plupart des deuxièmes passages de refroidissement (44) dudit segment.

4. Joint d'étanchéité ou segment d'étanchéité selon la revendication 1, 2 ou 3, dans lequel chacun des premiers passages de refroidissement (43) s'amincit, à partir d'une première zone d'écoulement, immédiatement adjacente à l'un des premiers orifices de refroidissement (41), jusqu'à une deuxième zone d'écoulement, adjacente à la première surface (38), et dans lequel chacun des deuxièmes passages de refroidissement (44) s'amincit, à partir de ladite première zone d'écoulement, immédiatement adjacente à l'un des deuxièmes orifices de refroidissement (42), jusqu'à ladite deuxième zone d'écoulement, adjacente à la deuxième surface (39), ledit amincissement étant destiné à augmenter le nombre de Mach de la zone de refroidissement au fur et à mesure que l'air de refroidissement s'écoule dans les passages de refroidissement et absorbe de la chaleur.

5. Joint d'étanchéité ou segment d'étanchéité selon l'une quelconque des revendications 1 à 4, dans lequel chacun des passages de refroidissement présente des lamelles à déclenchement (46) dans le sens de sa longueur, afin d'améliorer l'absorption de chaleur par l'air de refroidissement.

6. Joint d'étanchéité ou segment d'étanchéité selon l'une quelconque des revendications précédentes, dans lequel une partie (37) de la surface d'étanchéité (31) du ou de chaque segment (19) comprend un matériau formant barrière thermique.

7. Joint d'étanchéité ou segment d'étanchéité selon l'une quelconque des revendications précédentes, dans lequel chacune des parois (45) présente un orifice d'interalimentation (52), chaque passage de refroidissement communiquant avec des passages de refroidissement immédiatement adjacents par l'intermédiaire de l'un desdits orifices d'interalimentation.

8. Joint d'étanchéité ou segment d'étanchéité selon l'une quelconque des revendications précédentes, dans lequel une partie (36) de la surface d'étanchéité (31) du ou de chaque segment (19) comprend un revêtement en un matériau susceptible d'être usé par frottement.

9. Joint d'étanchéité ou segment d'étanchéité selon la revendication 8, dans lequel la partie (36) de la surface d'étanchéité de chaque segment, qui comprend un matériau susceptible d'être usé par frottement, comporte, à l'intérieur, une pluralité de trous de refroidissement pelliculaire (53), et dans lequel certains desdits passages de refroidissement communiquent avec la surface d'étanchéité (31) par l'intermédiaire desdits trous de refroidissement pelliculaire (53), de telle manière qu'une certaine quantité de l'air de refroidissement, circulant dans lesdits certains passages de refroidissement, vienne en contact d'écoulement avec ladite surface d'étanchéité (31), par l'intermédiaire desdits trous de refroidissement pelliculaire (53) et assure un refroidissement par film du segment, pour ainsi protéger la surface d'étanchéité contre tout contact direct avec le fluide moteur.

10. Joint annulaire d'étanchéité comprenant une pluralité de segments d'étanchéité selon l'une quelconque des revendications 2 à 9.

11. Procédé de fabrication d'un segment d'étanchéité pour un turbomoteur à écoulement axial, ledit procédé comprenant :
la prévision d'une coquille, ayant
un modèle de moulage d'une surface d'étanchéité,
un modèle de moulage d'une première surface, adjacent au modèle de moulage de la surface d'étanchéité et s'étendant le long de la coquille,
un modèle de moulage d'une deuxième surface, adjacent au modèle de moulage de la surface d'étanchéité et s'étendant le long de la coquille, parallèlement au modèle de moulage de la première surface,
un modèle de moulage de deux supports, chaque modèle de moulage s'étendant à partir de l'un des modèles de moulage pour la première surface ou pour la deuxième surface, et
un modèle de moulage d'une troisième surface, placé à l'opposé du modèle de moulage de la surface d'étanchéité et s'étendant entre le modèle de moulage des deux supports ;
la prévision d'un noyau, ayant
des modèles de moulage pour une pluralité de premiers passages de refroidissement, s'étendant à partir d'une première extrémité du noyau et se terminant juste avant une deuxième extrémité du noyau, opposée à la première extrémité de celui-ci, le modèle de moulage pour chacun des premiers passages de refroidissement présentant un modèle de moulage pour un premier orifice de refroidissement, adjacent à la première extrémité du noyau,
des modèles de moulage pour une pluralité de deuxièmes passages de refroidissement, s'étendant à partir de la deuxième extrémité du noyau et se terminant juste avant la première extrémité de celui-ci, le modèle de moulage pour chacun des deuxièmes passages de refroidissement présentant un modèle de moulage pour un deuxième orifice de refroidissement, adjacent à la deuxième extrémité du noyau ;
la mise en place du noyau dans la coquille de telle manière que les modèles de moulage pour les orifices de refroidissement portent sur le modèle de moulage de la troisième surface de la coquille, que les modèles de moulage des premiers passages de refroidissement portent sur les modèles de moulage de la première surface, et que les modèles de moulage des deuxièmes passages de refroidissement portent sur les modèles de moulage de la deuxième surface ;
l'introduction d'un matériau en fusion dans la coquille ;
la solidification du matériau ;
l'enlèvement de la coquille pour l'éloigner du matériau solidifié ; et
l'extraction du noyau, par lessivage, hors du matériau solidifié.

12. Procédé selon la revendication 11, dans lequel les modèles de moulage pour chacun des passages de refroidissement sont reliés, au niveau de la moitié du noyau, par un modèle de moulage pour une pluralité de trous d'interalimentation.

13. Procédé selon la revendication 11 ou 12, dans lequel chacun des modèles de moulage pour les passages de refroidissement comprend un modèle de moulage pour un orifice de réalimentation, qui porte sur ledit modèle de moulage pour ladite troisième surface, au cours de l'étape de mise en place du noyau dans la coquille.

14. Procédé selon la revendication 11, 12 ou 13, dans lequel chacun des modèles de moulage pour les passages de refroidissement comprend un modèle de moulage pour un trou de refroidissement pelliculaire, qui porte sur ledit modèle de moulage pour ladite surface d'étanchéité, au cours de l'étape de mise en place du noyau dans la coquille.
